# FASCICULE DE BREVET EUROPEEN

(11) **EP 2 005 273 B1**
(45) Date de publication et mention de la délivrance du brevet: **19.10.2011**
(21) Numéro de dépôt: 06755436.0
(22) Date de dépôt: 19.04.2006
(51) Int. Cl.: G05D 16/06, B65D 83/14

(54) **COMPOSANT PNEUMATIQUE POUR LA MICRO-DIFFUSION CONTRÔLÉE DE GAZ**
PNEUMATISCHE KOMPONENTE ZUR GESTEUERTEN MIKRODIFFUSION VON GAS
PNEUMATIC COMPONENT FOR THE CONTROLLED MICRO-DIFFUSION OF GAS

(30) Priorité: 30.03.2006 FR 0602771
(43) Date de publication de la demande: 24.12.2008
(73) Titulaire: AD Venta, 26270 Loriol (FR)
(72) Inventeur: MUSSOT, Jean-Luc, 26270 Loriol (FR)
(74) Mandataire: Somnier, Jean-Louis
(86) Numéro de dépôt international: PCT/FR2006/000883
(87) Numéro de publication internationale: WO 2007/113394

(56) Documents cités:
- EP-A- 0 678 797
- WO-A-00/35774
- WO-A1-00/35773
- WO-A1-99/44890
- FR-A- 2 876 809
- FR-A1- 2 711 973

## Description

La présente invention a pour objet un composant pneumatique pour la micro-diffusion contrôlée de tout gaz, tel que les mélanges de gaz aérosol ; on appellera dans la présente description sous la seule dénomination « gaz » toute composition, mélange ou gaz mono composant.

Le secteur technique de l'invention est le domaine du contrôle de débit d'un fluide, notamment dans le domaine de la régulation d'un flux gazeux à débit constant sous basse pression et plus particulièrement pour la diffusion d'un gaz ou mélange de gaz contenu dans un récipient de type boîtier aérosol.

De façon classique, un boîtier aérosol est constitué d'un récipient de gaz de forme cylindrique muni sur une de ses faces, dite partie haute et fermant son enveloppe cylindrique, d'une coupelle sur laquelle est fixée une valve. Cette valve permet la sortie de l'aérosol poussé par le gaz propulseur contenu sous pression lorsque celle-ci est maintenue appuyée. Ce type de boîtier peut servir également de récipient de gaz comprimé.

Ce dispositif connu présente l'inconvénient de ne pas pouvoir obtenir un débit de sortie constant car celui-ci varie en fonction de la pression interne du gaz contenu dans le boîtier.

Il est certes également connu de pouvoir réguler la pression et donc le débit d'un flux gazeux en sortie d'un récipient sous pression au moyen d'un détendeur prenant en compte la pression extérieure ou ambiante et les variations de pression de la source de gaz.

Un tel détendeur comprend de manière générale un clapet rappelé dans une position fermée contre un siège et contrôlant le passage du flux gazeux de la partie haute pression à une chambre basse pression, un organe de commande du clapet sous la dépendance d'une membrane ou piston fermant d'un côté la chambre basse pression, un moyen de rappel ou ressort prenant appui de l'autre côté de la membrane ou piston, et un moyen de réglage du moyen de rappel.

Dans ce domaine d'application on connaît le document EP 0 678 797 de la société KOSAN TEKNOVA qui enseigne des détendeurs complets à double étage avec de nombreux composants, de réalisation très complexe et dont l'objectif est donc de délivrer un gaz à une pression donnée à partir d'un réservoir de gaz muni d'une valve actionnée par un obturateur mobile et libérant le gaz dans une chambre haute pression communiquant avec une deuxième chambre basse pression à travers une valve basse pression ; la dite chambre basse pression est fermée par un deuxième obturateur mobile également dit basse pression, le gaz s'échappant ensuite de cette chambre basse pression par un orifice latéral vers l'extérieur du détendeur.

De nombreux dispositifs ont été développés pour adapter de tels systèmes détendeurs à des récipients aérosol, afin de limiter l'inconvénient de ne fournir qu'un débit de sortie variant avec la pression interne du gaz comprimé dans le récipient et qui diminue donc bien sûr au fur et à mesure de son usage.

On peut citer par exemple la demande de brevet FR 2774077 de la société LOREAL qui décrit une modification interne de la valve elle-même du récipient aérosol afin de régulariser la pression de sortie du fluide mais sans changer le principe de fonctionnement de l'aérosol lui-même, c'est-à-dire, nécessitant un appui manuel sur le bouton diffuseur et comportant de multiples pièces formant un dispositif assez complexe.

De même, on connaît la demande FR 2702465 de Messieurs LECOFFRE et TOURNASSAT qui décrit un dispositif rajouté sur le récipient aérosol sans modifier celui-ci et créant une perte de charge à travers un canal de très grande longueur et de faible section, afin d'obtenir un faible débit mais qui n'est pas constant pour les récipients aérosols contenant du gaz non liquéfié, et dont la réalisation est également complexe.

Dans un autre domaine d'application, on peut citer également les documents WO 00/35774 et WO 99/44890 des sociétés respectivement HEINEKEN et DINCO TRADING, qui décrivent des systèmes disposés à l'intérieur d'un récipient pour y maintenir une pression de gaz constante et qui comprennent pour cela un dispositif de contrôle de pression fixé sur une réserve de gaz placée dans ledit récipient et munie d'une valve actionnée par un obturateur mobile dans une chambre ; lequel obturateur appuie sur cette valve suivant une force prédéterminée, de telle façon que le gaz ainsi relâché dans la chambre s'évacue en particulier par un orifice latéral de celle-ci pour maintenir la pression dans ledit récipient.

On pourrait citer de nombreux autres dispositifs de même type, mais soit ils ne répondent pas pour certains, comme ci-dessus, à une véritable régulation d'un flux gazeux à débit constant sous basse pression, tel que nécessaire pour le calibrage d'analyseurs, soit ils nécessitent toujours l'intervention manuelle d'un opérateur pour maintenir appuyé un bouton de commande libérant le gaz à diffuser, soit ils sont pour la plupart assez complexes de réalisation, nécessitant des usinages particuliers pour disposer des sièges et clapets associés, ainsi que différents canaux reliant la chambre haute pression et basse pression du dispositif détendeur que l'on veut obtenir.

En effet, le maintien d'appui manuel n'est pas compatible avec la nécessité de diffuser un gaz en continu (pendant même plusieurs jours sans arrêt) pour des applications, telles qu'à titre d'exemple la diffusion de parfums ou phéromones, ou pour la stimulation des hévéas par éthylène gazeux qui permet une production accrue de latex avec un diffuseur d'éthylène à très faible débit constant continu, et fixé sur chaque arbre.

Le problème posé est donc de pouvoir réaliser un dispositif de maintien de la pression, en sortie d'une valve existante d'un récipient à aérosol, à une valeur constante et définie par l'utilisateur et de diffuser ainsi le gaz contenu dans celui-ci à débit constant, et cela en continu sans actionnement manuel autre que celui de sa mise en fonctionnement et donc non nécessairement maintenu sur le dispositif pendant toute la durée de diffusion de gaz, le dispositif devant être le plus simple possible à réaliser, nécessitant moins de pièces que les détendeurs connus, facile à mettre en place et utilisant au mieux la technologie existante déjà développée pour des applications à grand volume.

Une solution au problème posé est un composant pneumatique pour la micro-diffusion contrôlée de gaz, destiné à être fixé sur un récipient de gaz, lequel récipient est un réservoir de gaz sous pression muni d'une valve aérosol, lequel composant comprend :
- un corps creux dont la partie intérieure comporte au moins une chambre dite supérieure fermée par un obturateur mobile et étanche par rapport aux parois intérieures latérales de la partie intérieure du corps creux et qui entourent ledit obturateur formant organe de commande,
- un système de fixation du corps, solidaire de la périphérie de l'extrémité distale de sa partie creuse au-delà de l'obturateur par rapport à la chambre supérieure et coopérant avec la partie haute du récipient entourant la valve,
- au moins une chambre dite inférieure qui est constituée une fois le composant fixé sur le récipient, et fermée entre l'obturateur et ladite partie haute du récipient, et ledit obturateur venant en appui suivant une force prédéterminée contre ladite valve,
- un orifice latéral percé dans le corps et communiquant avec la chambre inférieure, et apte à assurer l'évacuation des gaz contenus dans le récipient, et à travers la chambre inférieure, vers l'extérieur du composant une fois fixé sur celui-ci-,
- et selon l'invention le système de fixation comprend un joint d'étanchéité et des moyens d'accrochage aptes à coopérer d'une manière étanche avec la partie haute du récipient,
- l'orifice de sortie est calibré et prédéfinit un certain débit de gaz en fonction de la pression régnant dans la chambre inférieure et maintenue par équilibre de pression de part et d'autre de l'organe de commande,
- et le composant pneumatique est utilisé pour la microdiffusion contrôlée du gaz en continu et à débit constant à partir d'un récipient préexistant et demeurant inchangé.

Le résultat est un nouveau dispositif de contrôle d'un flux gazeux, très simple et agencé pour être monté directement par encliquetage sur des récipients de type aérosol dont il utilise la valve à aérosol existante comme clapet haute pression sans modification de celle-ci ; ce nouveau dispositif simplifié de contrôle et réglage de pression est très simple à réaliser et à fabriquer en grande série permettant de réduire les coûts de fabrication par rapport aux systèmes actuels qui font appel à des composants spécifiques interdisant des solutions économiques ; la présente invention permet de se positionner sur des marchés existants avec un fort avantage concurrentiel, en proposant un composant se présentant sous une forme unitaire, compacte et ergonomique et ne nécessitant la mise en oeuvre que d'un minimum de pièces.

Un tel composant pneumatique permet d'assurer en continu la diffusion du gaz à partir du récipient aérosol préexistant et demeurant inchangé, et cela sans actionnement manuel permanent.

On pourrait citer d'autres avantages de la présente invention mais ceux cités ci-dessus en montrent déjà suffisamment pour en prouver la nouveauté et l'intérêt.

La description ci-après et les dessins joints représentent un exemple de la réalisation de l'invention, mais n'ont aucun caractère limitatif : d'autres réalisations sont possibles dans le cadre de la portée et de l'étendue de cette invention.
La figure 1 est une vue en coupe axiale et latérale d'un composant pneumatique suivant un exemple de réalisation de l'invention et prêt à être monté sur un récipient aérosol existant et connu.
La figure 2 est une vue en coupe latérale comme sur la figure 1 du même dispositif suivant l'invention, une fois monté sur le récipient aérosol.
La figure 3 est une vue en coupe axiale d'un composant pneumatique de régulation de flux gazeux selon l'invention monté en place sur un récipient de gaz selon un deuxième exemple de réalisation.
La figure 4 est une variante d'un composant pneumatique selon le deuxième exemple.
La figure 5 est une vue en coupe partielle décrivant des détails techniques complémentaires.
La figure 6 est une vue en coupe du composant pneumatique selon un troisième exemple de réalisation.

Le composant pneumatique suivant l'invention comprend un corps 1 creux sensiblement tubulaire et réalisé en matériau compatible et étanche aux gaz utilisés, tel qu'en matière plastique : sa partie intérieure comporte au moins une première chambre 10 dite supérieure et fermée par un obturateur 20, étanche par rapport aux parois latérales intérieures 16 de la partie intérieure du corps creux 1 et qui entourent cet obturateur 20 formant organe de commande.

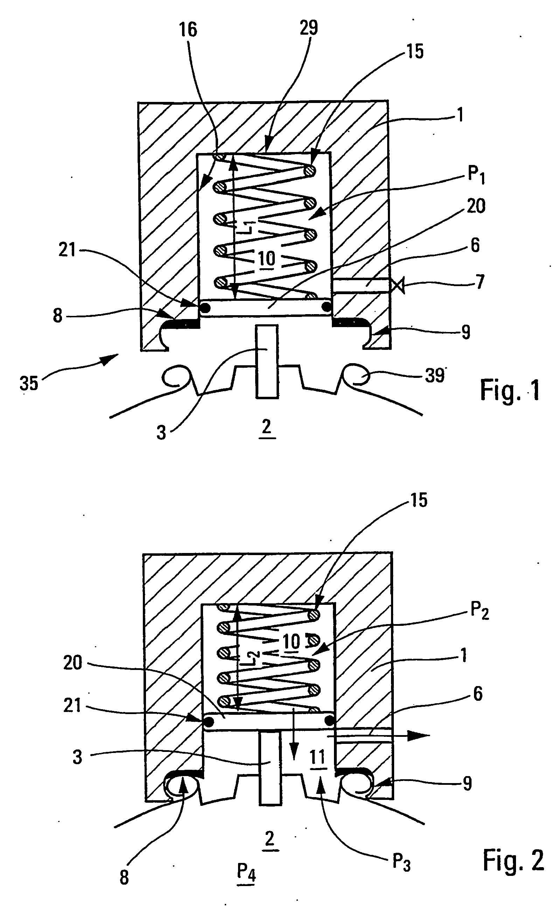

A son extrémité distale 35, ouverte au-delà de l'obturateur 20 par rapport à la chambre supérieure 10, le composant pneumatique suivant l'invention comprend un système de fixation 9 du corps 1, solidaire de sa périphérie et apte à coopérer d'une manière étanche avec la partie haute d'un récipient 2 de gaz sous pression P₄ muni d'une valve aérosol 3 ; ledit système de fixation 9 comprend un joint d'étanchéité 8 et des moyens d'accrochage tel qu'un rebord arrondi vers l'intérieur et élastique, coopérant par « emboîtement forcé » avec la partie circulaire 39 du récipient 2 qui assure l'intégration de l'ensemble support de la valve aérosol 3 sur la partie haute de l'enveloppe du récipient 2 et qui est en effet généralement de section également de forme arrondie: ce système de fixation 9 du composant pneumatique suivant l'invention entoure la valve 3 et permet de constituer, une fois le composant fixé sur le récipient 2 (tel que représenté sur les figures 2, 3, 4 et 6) une première chambre dite inférieure 11 entre l'obturateur 20 et ladite partie haute du récipient 2.

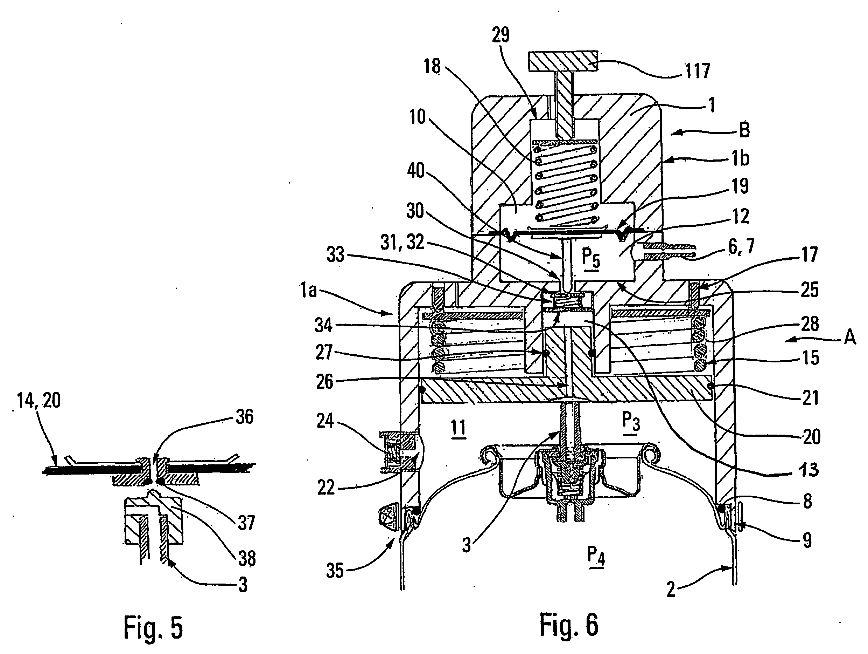

Lors de la fixation du composant pneumatique sur le récipient aérosol 2, l'organe de commande ou obturateur 20 vient en appui suivant une force prédéterminée contre l'extrémité supérieure de la valve 3 et comprend tout dispositif permettant un tel appui sans obturer l'orifice de sortie de celle-ci tel que représenté sur la figure 5.

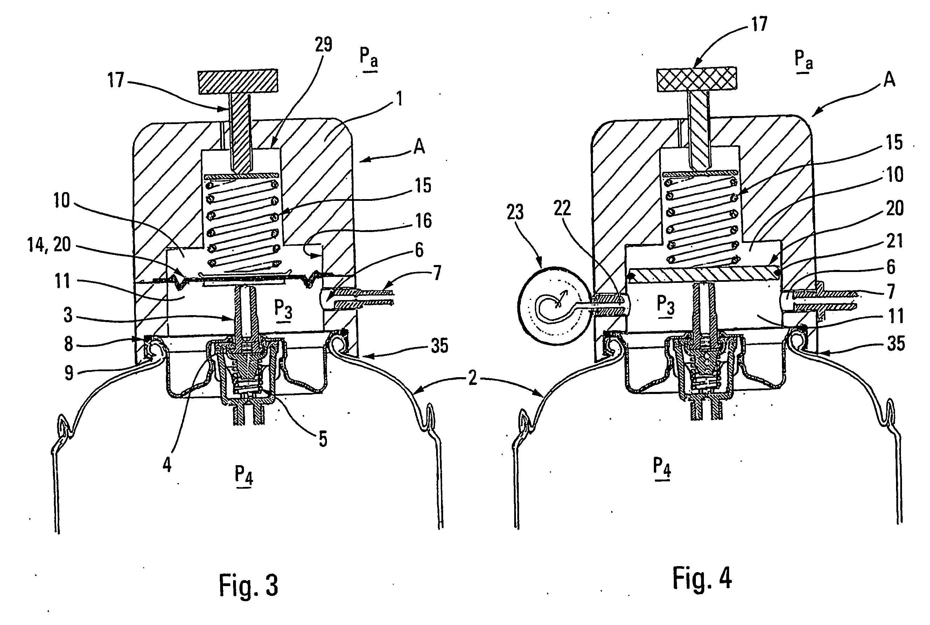

Suivant les modes de réalisation représentés sur les figures jointes, la chambre supérieure 10 peut contenir un gaz tel que de l'air à une pression P₁ initiale (tel que suivant les figures 1 et 2) ou un ressort 15 (suivant les figures 3 et 4) associé ou non à un moyen de réglage 17, ou même les deux (suivant les figures 1 et 2), qui appuient sur l'organe de commandé 20.

En combinant en effet la force d'un ressort et la compression d'un gaz on augmente ainsi la possibilité de réglage de la force d'appui de l'organe de commande 20 sur la valve 3, la force de réaction due à la compression du ressort 15 agissant dans le même sens que celle du gaz contenu dans la chambre 10. Ce ressort 15 peut être un ressort à spirales dont une extrémité s'appuie sur le fond 29 de la chambre supérieure 10 du corps creux ou sur le moyen de réglage 17, et l'autre extrémité sur l'organe de commande 20, comme représenté sur les figures jointes.

Au repos, c'est-à-dire le composant pneumatique n'étant pas encore fixé sur le récipient 2, l'organe de commande 20 est situé à une distance L1 du fond 29 qui constitue l'extrémité opposée à celle distale 35 du composant, et lorsque celui-ci est fixé sur le récipient 2, l'appui, suivant une force prédéterminée en fonction de la pression P₁ et/ou des caractéristiques choisies du ressort 15, de l'organe de commande 20 contre ladite valve 3 le fait remonter jusqu'à une distance L₂ : cette opération comprime le ressort et/ou le gaz contenu dans cette chambre 10, tout en faisant descendre la partie mobile de la valve 3 du récipient aérosol vers l'intérieur de celui-ci, laissant ainsi sortir par cette valve 3 du gaz ou mélange de gaz contenu dans ce récipient 2 et qui vient remplir la chambre inférieure 11 ; puis ce gaz s'échappe vers l'extérieur du composant depuis cette chambre 11 par un orifice latéral 6 formant sortie basse pression, percé dans le corps 1 et communiquant avec cette chambre 11, une fois donc le dispositif fixé sur le récipient 2.

Ledit orifice 6 peut être muni d'une vanne 7 pouvant assurer la fonction de régulateur de débit à une valeur souhaitée, ou comporter au moins un élément à trou calibré.

Cet orifice de sortie 6 étant ainsi calibré ou réglable permet de prédéfinir un certain débit de gaz en fonction de la pression P₃ également prédéfinie régnant dans la chambre 11, ladite pression P₃ étant elle-même maintenue par équilibre de pression de part et d'autre de l'organe de commande 20 avec la pression P₂ régnant dans la chambre supérieure 10 et/ou la force de rappel du ressort 15.

En effet, si cette pression P₃ diminue du fait du gaz s'échappant par l'orifice 6, l'organe de commande 20 descend alors par l'effet de la pression P₂ et/ou du ressort 15 et appuie sur la valve 3, libérant ainsi plus de gaz, qui fait remonter la pression P₃ jusqu'à de nouveau l'équilibre car si cette pression P₃ devenait supérieure à la pression P₂ et/ou la force de rappel du ressort 15, la valve 3 remonterait complètement jusqu'à se fermer, arrêtant la sortie du gaz du récipient 2 dans la chambre inférieure 11.

Ainsi la haute pression P₄ régnant dans le récipient 2 est ramenée dans la chambre 11 inférieure du composant à une moyenne pression P₃ par l'organe de commande 20 en fonction de la force de tarage du ressort 15 et/ou de la pression P₂ régnant dans la chambre supérieure 10.

L'utilisateur dispose donc au raccord de la sortie 6 basse pression, d'un gaz disponible à une basse pression, typiquement légèrement supérieure à la pression atmosphérique, et à un débit régulé, permanent et constant (tant que la pression P₄ dans le récipient 2 est supérieure à celle P₃), comme cela est nécessaire par exemple pour les applications de calibrage d'analyseurs, de diffusion de parfums ou phéromones ou la stimulation des hévéas par éthylène gazeux....

Connaissant ainsi les caractéristiques de la valve aérosol 3 standard, et de la géométrie de la partie supérieure du récipient à aérosol 2, l'homme du métier peut définir les caractéristiques de réalisation du composant pneumatique suivant l'invention, telles que celles de l'orifice de sortie 6, et du ressort 15 et/ou de la pression P₁ initiale de gaz contenu dans la chambre supérieure 10, ainsi que la position L1 initiale de l'organe de commande 20 de telle façon qu'une fois le composant monté sur le récipient 2, ledit organe de commande 20 se positionne à une distance L₂ du fond 29 du composant, afin d'obtenir une force d'appui du ressort et/ou une pression P₂ équilibrant la pression P₃ voulue pour assurer le débit de diffusion prédéfinie du gaz à travers l'orifice 6, lequel débit peut être obtenu très faible et également continu sans interruption, jusqu'à ce que le récipient 2 soit quasiment vide.

On peut alors considérer que le composant suivant l'invention réalise ainsi un dispositif comportant un moyen de détente A qui comprend :
- un clapet haute pression constitué de la valve aérosol 3, maintenue en position fermée sur son siège 4 par la pression du gaz interne P₄ ainsi que son ressort de rappel 5.
- une chambre moyenne pression 11, dite chambre inférieure,
- un organe de commande constitué par l'obturateur 20 étanche fermant d'un côté la chambre inférieure 11 et commandant l'ouverture/fermeture du clapet 3,
- au moins soit un ressort de tarage 15 soit une contrepression P₂, soit les deux, et prenant appui de l'autre côté de l'obturateur 20.

Suivant le mode de réalisation de la figure 3 l'obturateur ou organe de commande 20 est un moyen élastique 14 constitué d'une membrane déformable fixée à sa périphérie aux parois latérales intérieures 16 du corps creux 1 et qui délimite, à l'intérieur de celui-ci la chambre supérieure 10, en communication avec la pression ambiante Pa, laquelle chambre comporte un ressort 15 de tarage ou régulation dont une extrémité s'appuie sur la face inférieure d'un mécanisme 17 de réglage du ressort et dont l'autre extrémité s'appuie sur la face supérieure de la membrane 14.

En partie inférieure, la membrane 14 délimite la chambre inférieure 11 maintenue donc à une pression constante P₃ par le moyen de régulation constitué de la membrane 14 exerçant une pression sur la valve aérosol 3 du récipient de gaz 2 par l'intermédiaire du ressort 15.

Dans un autre mode de réalisation suivant la figure 4 l'organe de commande ou obturateur 20 est un piston 20, remplaçant la membrane élastique 14 de la figure 3, coulissant contre les parois latérales internes 16 du corps creux et muni d'un joint 21 frottant contre celles-ci et assurant l'étanchéité entre la chambre inférieure 11 et la chambre supérieure 10, celle-ci étant de forme cylindrique intérieure pour permettre le coulissement du piston 20.

Le corps 1 peut ainsi être réalisé d'un seul bloc usiné ou moulé ou coulé. En plus de la sortie 6, le corps 1 peut comporter un deuxième orifice de sortie de gaz 22, mettant en communication la chambre inférieure 11 avec l'extérieur, et sur lequel peut se monter un moyen de mesure de la pression 23, tel un manomètre. Le reste de la description et le principe de fonctionnement sont similaires à la description précédente.

Suivant le mode de réalisation des figures 1 et 2, l'organe de commande 20 est identique à celui de la figure 4 mais la chambre supérieure 10 est complètement fermée et borgne à son extrémité 29 opposée au piston 20 et à celle distale 35 du système d'accrochage 9 du composant, et constituant le fond supérieur de celui-ci.

Dans ce mode de réalisation utilisant la variation prédéterminée de pression P₁, P₂ d'un gaz dans la chambre supérieure 10 alors complètement étanche, l'orifice latéral 6 percé dans le corps 1 communique avec la première chambre supérieure 10 quand le dispositif est prêt à être installé sur le récipient 2, comme représenté sur la figure 1, afin de pouvoir, par exemple, pré-remplir cette chambre supérieure 10 par un gaz à une pression initiale P₁.

Puis une fois le dispositif fixé sur ce récipient comme représenté sur la figure 2, la valve 3 faisant remonter le piston 20 en comprimant le gaz contenu dans la chambre supérieure 10, comme expliqué précédemment, l'orifice latéral 6 communique alors avec la chambre inférieure 11.

On obtient ainsi un composant pneumatique de micro-diffusion contrôlé de gaz ne comportant en fait que deux pièces mobiles l'une part rapport à l'autre, à savoir le corps 1 et le piston 20, deux joints d'étanchéité 8 et 21 et éventuellement une vanne 7 de régulation de débit.

La figure 5 représente un déflecteur de gaz 38 qui peut être monté directement sur l'extrémité de la valve 3 aérosol du récipient 2 afin de dévier le flux de gaz sortant de la valve 3 lors de l'appui sur celle-ci de l'organe de commande 14, 20.

Par ailleurs, essentiellement dans les modes de réalisation des figures 3, 4 et 6, l'organe de commande 14, 20 peut être troué en son centre par au moins un orifice 36, de préférence de petite taille. Un joint 37 assure l'étanchéité et la fermeture de l'orifice 36 lorsque l'organe de commande 14, 20 est maintenu en contact avec le déflecteur 38 par la force du ressort 15 et/ou de la pression P₂. Lorsque le ressort de tarage 15 est détendu grâce au moyen de réglage 17 et/ou en cas de purge de la chambre supérieure 10, l'orifice 36 s'ouvre et met en liaison la chambre inférieure 11 et la chambre supérieure 10, ce qui permet d'obtenir une décompression rapide de la pression P₃ régnant à l'intérieur de la chambre inférieure 11.

La figure 6 représente un composant pneumatique de diffusion de gaz selon un troisième mode de réalisation de l'invention destiné à être fixé sur un récipient de gaz (2) sous pression muni d'une valve aérosol (3), et qui comprend
- un corps 1 creux dont la partie intérieure comporte une première chambre 10 dite supérieure fermée par un premier obturateur 19 mobile et étanche par rapport aux parois intérieures latérales 16 de la partie intérieure du corps creux et qui entourent ledit premier obturateur 19 formant organe de commande,
- une première chambre dite inférieure 11 qui est constituée une fois le composant fixé sur le récipient 2, et fermée entre un deuxième obturateur 20 et ladite partie haute du récipient 2, et ledit obturateur 20 venant en appui suivant une force prédéterminée contre ladite valve 3,
- un système de fixation 9 du corps 1, solidaire de la périphérie 35 de l'extrémité distale par rapport à la chambre supérieure 10 de sa partie creuse au-delà du deuxième obturateur 20 et coopérant avec la partie haute du récipient 2 entourant la valve 3,
- une deuxième chambre inférieure 12 disposée entre la chambre supérieure 10 et la première chambre inférieure 11 constituée une fois le composant fixé sur le récipient 2, et fermée entre le premier obturateur (19) étanche la séparant de la chambre supérieure (10) et une paroi 25 transversale percée d'un orifice 30 muni d'un clapet 32, s'ouvrant par l'appui d'un doigt 40 lié au premier obturateur 19 et communiquant avec une chambre dite intermédiaire 13 fermée elle-même à l'opposé de la paroi 25 transversale par le deuxième obturateur 20,
- lequel deuxième obturateur 20 comporte un orifice 26 de communication entre la première chambre inférieure 11 et la chambre intermédiaire 13, l'orifice latéral 6 d'évacuation des gaz vers l'extérieur du composant étant situé dans la deuxième chambre inférieure 12,
- une deuxième chambre supérieure 28 fermée par le premier obturateur 20, et entourant la chambre intermédiaire 13 qui est de préférence située au centre,
- un orifice latéral 6 percé dans le corps 1 communiquant avec la deuxième chambre inférieure 12, et apte à assurer l'évacuation des gaz contenus dans le récipient 2 et à travers les chambres inférieures 11, 12 et la chambre intérieure 13, vers l'extérieur du composant une fois fixé sur celui-ci,
- le système de fixation 9 comprend un joint d'étanchéité 8 et des moyens d'accrochage aptes à coopérer d'une manière étanche avec la partie haute du récipient 2,
- l'orifice de sortie 6 est calibré et prédéfinit un certain débit de gaz en fonction de la pression P₅ régnant dans la deuxième chambre inférieure 12 et maintenue par un équilibre de pression de part et d'autre de l'organe de commande 19,
- et le composant pneumatique est utilisé pour la microdiffusion contrôlée du gaz en continu et à débit constant à partir d'un récipient 2 préexistant et demeurant inchangé.

Cette variante diffère principalement de celles décrites précédemment par le fait que l'ensemble de détente A précédemment décrit sert de premier étage d'un détendeur double détente. Dans ce cas, la pression P₃ délivrée en sortie du récipient 2 par l'ensemble de détente A agit sur la face inférieure d'une deuxième ensemble de détente B qui abaisse la pression du gaz délivré par l'orifice 6 à une valeur régulée plus faible et plus précise. Suivant ce mode de réalisation, le composant pneumatique suivant l'invention permet d'obtenir un dispositif tel qu'il comprend:
- le moyen de détente intégré A qui appartient en totalité à la section inférieure la du corps 1 du composant et un deuxième moyen détendeur de pression B, disposé en série dans une deuxième section 1b coopérant avec la première section par l'intermédiaire de l'orifice 30,
- les deux ensembles de détente A et B séparent le corps 1 en une première chambre inférieure 11 et une chambre intermédiaire 13 maintenues à la pression P₃ et une deuxième chambre inférieure 12 maintenue à une pression P₅ régulée,
- la sortie basse pression 6 munie d'un moyen régulateur de débit 7 est disposée dans la deuxième chambre inférieure 12 de la deuxième section 1_{b} du corps 1.

Le corps 1 comprend ainsi dans sa section inférieure 1ₐ un piston 20 muni de son joint d'étanchéité 21 qui délimite au niveau inférieur la chambre inférieure 11, maintenue à la pression P₃. Un ressort de tarage 15 situé dans la deuxième chambre supérieure 28 permet d'appuyer sur le piston 20 avec une force préréglée grâce à son dispositif de réglage 17, lequel piston appuie sur l'extrémité de la valve 3. Les risques de surpression au niveau de la chambre inférieure 11, 12 sont évités grâce à une soupape de sécurité 24 monté dans l'orifice de sortie de gaz moyenne pression 22, mettant en communication la chambre inférieure 11, 12 avec l'extérieur. Cette soupape 24 est calibrée de façon à s'ouvrir lorsque la pression dans la chambre dépasse la consigne.

Le piston 20 coulisse à sa périphérie le long des parois de la chambre supérieure 28 cylindrique et en son centre dans un alésage central qui forme la chambre intermédiaire 13, maintenue à la même pression P3 que celle de la chambre inférieure 11 grâce au piston 20 muni d'un orifice central 26 et d'un joint d'étanchéité 27 coopérant avec les parois de la chambre intermédiaire 13. Cette chambre 13 communique avec la deuxième chambre inférieure 12 grâce à l'orifice 30 et est munie en partie supérieure du clapet 32 maintenu en position fermée sur son siège 31 par un ressort 33, lui-même maintenu en tension par un moyen de réglage tel qu'une bague 34 filetée.

La partie ou section supérieure 1_{b} du corps creux 1 comporte un deuxième obturateur à membrane 19 déformable qui délimite, à l'intérieur du corps 1 la première chambre 10 supérieure enfermant un ressort 18 de régulation dont une extrémité s'appuie sur la face inférieure d'un mécanisme 117 de réglage du ressort et dont l'autre extrémité s'appuie sur la face supérieure de la membrane 19. En dessous de la membrane 19, se trouve la deuxième chambre inférieure 12 maintenue à une pression constante P₅ par le moyen de réglage de la pression 19, 18.

Le principe de fonctionnement de chaque ensemble de détente est similaire à celui décrit précédemment.

On comprendra des descriptions qui précèdent, que l'ensemble unitaire selon l'invention, qui peut être livré séparément ou avec le récipient de gaz permet à l'utilisateur de disposer, par simple intervention sur les moyens de réglage décrits précédemment, tels que ceux de la pression du gaz et/ou du ressort dans la chambre supérieure 10, 28, d'un débit constant, permanent et présélectionné à la demande.

Une fois la réserve de gaz 2 épuisée, l'utilisateur peut déconnecter le composant pneumatique suivant l'invention de son installation et remplacer le récipient de gaz lorsque celui est jetable ou le renvoie au fournisseur de gaz qui grâce à un outillage qui lui est propre peut le remplir à nouveau simplement par la valve de remplissage.

De préférence, ce dispositif convient tout particulièrement aux récipients de gaz transportables.

Bien que l'invention ait été décrite en liaison avec des exemples particuliers de réalisation, il est évident qu'elle n'y est nullement limitée mais au contraire susceptible de modifications et de variantes qui apparaîtront à l'homme de l'art et qu'elle comprend tous les éléments techniques des moyens décrits ainsi que leurs combinaisons si celles-ci entrent dans le cadre de l'invention.

## Revendications

1. Composant pneumatique, destiné à être fixé sur un récipient de gaz (2) sous pression muni d'une valve aérosol (3), et comprenant :
- un corps (1) creux dont la partie intérieure comporte au moins une chambre (10) dite supérieure fermée par un obturateur (20) mobile et étanche par rapport aux parois intérieures latérales (16) de la partie intérieure du corps creux et qui entourent ledit obturateur (20) formant organe de commande,
- un système de fixation (9) du corps (1), solidaire de la périphérie (35) de l'extrémité distale de sa partie creuse au-delà de l'obturateur (20) par rapport à la chambre supérieure (10) coopérant avec la partie haute du récipient (2) entourant la valve (3),
- au moins une chambre dite inférieure (11) qui est constituée une fois le composant fixé sur le récipient (2), et fermée entre l'obturateur (20) et ladite partie haute du récipient (2), et ledit obturateur (20) venant en appui suivant une force prédéterminée contre ladite valve (3),
- un orifice latéral (6) percé dans le corps (1) communiquant avec la chambre inférieure (11), et apte à assurer l'évacuation des gaz contenus dans le récipient (2) et à travers la chambre inférieure (11), vers l'extérieur du composant une fois fixé sur celui-ci, **caractérisé en ce que** :
- le système de fixation (9) comprend un joint d'étanchéité (8) et des moyens d'accrochage aptes à coopérer d'une manière étanche avec la partie haute du récipient (2),
- l'orifice de sortie (6) est calibré et prédéfinit un certain débit de gaz en fonction de la pression P₃ régnant dans la chambre (11) et maintenue par équilibre de pression de part et d'autre de l'organe de commande (20),
- et le composant pneumatique est utilisé pour la microdiffusion contrôlée du gaz en continu et à débit constant à partir d'un récipient (2) préexistant et demeurant inchangé.

2. Composant pneumatique destiné à être fixé sur un récipient de gaz (2) sous pression muni d'une valve aérosol (3), et comprenant :
- un corps (1) creux dont la partie intérieure comporte une première chambre (10) dite supérieure fermée par un premier obturateur (19) mobile et étanche par rapport aux parois intérieures latérales (16) de la partie intérieure du corps creux et qui entourent ledit premier obturateur (19) formant organe de commande,
- une première chambre dite inférieure (11) qui est constituée une fois le composant fixé sur le récipient (2), et fermée entre un deuxième obturateur (20) et la partie haute du récipient (2), et ledit obturateur (20) venant en appui suivant une force prédéterminée contre ladite valve (3),
- un système de fixation (9) du corps (1), solidaire de la périphérie (35) de l'extrémité distale par rapport à la chambre supérieure (10) de sa partie creuse au-delà du deuxième obturateur (20) et coopérant avec la partie haute du récipient (2) entourant la valve (3),
- une deuxième chambre inférieure (12) disposée entre la chambre: supérieure (10) et la première chambre inférieure (11) constituée une fois le composant fixé sur le récipient (2), et fermée entre le premier obturateur (19) étanche la séparant de la chambre supérieure (10) et une paroi (25) transversale percée d'un orifice (30) muni d'un clapet (32), s'ouvrant par l'appui d'un doigt (40) lié au premier obturateur (19) et communiquant avec une chambre dite intermédiaire (13) fermée elle-même à l'opposé de la paroi (25) transversale par le deuxième obturateur (20),
- lequel deuxième obturateur (20) comporté un orifice (26) de communication entre la première chambre inférieure (11) et la chambre intermédiaire (13), un orifice latéral (6) d'évacuation des gaz vers l'extérieur du composant étant situé dans la deuxième chambre inférieure (12),
- une deuxième chambre supérieure (28) fermée par le premier obturateur (20),
- l'orifice latéral (6) percé dans lé corps (1) communiquant avec la deuxième chambre inférieure (12), et étant apte à assurer l'évacuation des gaz contenus dans le récipient (2) et à travers les chambres inférieures (11, 12) et la chambre intermédiaire (13), vers l'extérieur du composant une fois fixé sur celui-ci,
- le système de fixation (9) comprenant un joint d'étanchéité (8) et des moyens d'accrochage aptes à coopérer d'une manière étanche avec la partie haute du récipient (2),
- l'orifice de sortie (6) étant calibré et prédéfinissant un certain débit de gaz en fonction de la pression P₅ régnant dans la deuxième chambre inférieure (12) et maintenue par un équilibre de pression de part et d'autre de l'organe de commande (19),
- et le composant pneumatique étant utilisé pour la microdiffusion contrôlée du gaz en continu et à débit constant à partir d'un récipient (2) préexistant et demeurant inchangé.

3. Composant pneumatique suivant l'une quelconque des revendications 1 ou 2, **caractérisé en ce que** l'organe de commande (19, 20) est constitué d'un moyen élastique (14) fixé à sa périphérie aux parois latérales (16).

4. Composant pneumatique suivant l'une quelconque des revendications 1 ou 2, **caractérisé en ce que** l'organe de commande (19, 20) est un piston coulissant contre les parois latérales intérieures (16), et la chambre supérieure (10) est cylindrique.

5. Composant pneumatique suivant la revendication 4, **caractérisé en ce que** la chambre supérieure (10, 28) est complètement fermée et borgne à son extrémité (29) opposée au piston (19, 20).

6. Composant pneumatique selon la revendication 5, **caractérisé en ce que** l'orifice latéral (6) percé dans le corps (1) communique avec la première chambre supérieure (10) quand le dispositif est prêt à être installé sur le récipient (2), puis, une fois le dispositif fixé sur ce récipient, la valve (3) faisant remonter le piston (20) en comprimant le gaz contenu dans cette chambre supérieure (10), l'orifice latéral (6) communique avec la chambre inférieure (11, 12).

7. Composant pneumatique selon l'une quelconque des revendications 5 ou 6, **caractérisé en ce que** la chambre supérieure (10, 28) est pré-remplie par un gaz (P) à une pression initiale (P₁).

8. Composant pneumatique selon l'une quelconque des revendications 1 à. 7, **caractérisé en ce que** l'orifice latéral (6) est muni d'une vanne (7) ou comporte au moins un élément à trou calibre permettant de prédéfinir un certain débit de gaz.

9. Composant pneumatique selon l'une quelconque des revendications 1 à 8, **caractérisé en ce qu'**il comprend un ressort (15, 18) disposé dans la chambre supérieure (10, 28) et qui appuie sur l'organe de commande (19, 20).

10. Composant pneumatique selon la revendication 9, **caractérise en ce qu'**il comprend un moyen de réglage (17, 117) dudit ressort (15, 18).

11. Composant pneumatique selon l'une quelconque des revendications 1 à 10, **caractérisé en ce que** le corps (1) comporte un deuxième orifice (22) de sortie de gaz mettant en communication la chambre inférieure (11, 12) avec l'extérieur et sur lequel est monté un moyen de mesure de la pression (23) ou une soupape de sécurité (24).

12. Composant pneumatique selon l'une quelconque des revendications 1 à 11, **caractérisé en ce qu'**il comporte un déflecteur de gaz (38) apte a être monté sur l'extrémité de la valve (3) aérosol du récipient (2) et de dévier le flux de gaz sortant de la valve (3) lors de l'appui sur celle-ci de l'organe de commande (19, 20).

## Claims

1. Pneumatic component, designed to be attached to a pressurized gas receptacle (2) furnished with an aerosol valve (3), and comprising:
- a hollow body (1) the internal portion of which comprises at least one chamber (10) said to be the top chamber closed by a movable stopper (20) and sealed relative to the lateral internal walls (16) of the internal portion of the hollow body, which walls surround the said stopper (20) forming a control member,
- a system (9) for attachment of the body (1) secured to the periphery (35) of the distal end of its hollow portion beyond the stopper (20) relative to the top chamber (10) interacting with the top portion of the receptacle (2) surrounding the valve (3),
- at least one chamber said to be the bottom chamber (11) which is formed once the component is attached to the receptacle (2), and is closed between the stopper (20) and the said top portion of the receptacle (2), and the said stopper (20) coming to rest following a predetermined force against the said valve (3),
- a lateral orifice (6) pierced in the body (1) communicating with the bottom chamber (11), and capable of discharging the gases contained in the receptacle (2) and through the bottom chamber (11), to the outside of the component once attached to the latter, **characterized in that**:
- the attachment system (9) comprises a seal (8) and coupling means capable of interacting in a sealed manner with the top portion of the receptacle (2),
- the outlet orifice (6) is calibrated and predefines a certain gas flow rate depending on the pressure P₃ that exists in the chamber (11) and held by pressure balance on either side of the control member (20),
- and the pneumatic component is used for the controlled microdiffusion of the gas continuously and at a constant flow rate from a receptacle (2) that is pre-existing and remaining unchanged.

2. Pneumatic component designed to be attached to a pressurized gas receptacle (2) furnished with an aerosol valve (3), and comprising:
- a hollow body (1) the internal portion of which comprises a first chamber (10) said to be the top chamber closed by a first movable stopper (19) and sealed relative to the lateral internal walls (16) of the internal portion of the hollow body, which walls surround the said first stopper (19) forming a control member,
- a first chamber said to be the bottom chamber (11) which is formed once the component is attached to the receptacle (2), and is closed between a second stopper (20) and the top portion of the receptacle (2), and the said stopper (20) coming to rest following a predetermined force against the said valve (3),
- a system (9) for attachment of the body (1), secured to the periphery (35) of the distal end relative to the top chamber (10) of its hollow portion beyond the second stopper (20) and interacting with the top portion of the receptacle (2) surrounding the valve (3),
- a second bottom chamber (12) placed between the top chamber (10) and the first bottom chamber (11) formed once the component is attached to the receptacle (2), and closed between the first sealed stopper (19) separating it from the top chamber (10) and a transverse wall (25) pierced with an orifice (30) furnished with a valve element (32), being opened by the pressure of a finger (40) associated with the first stopper (19) and communicating with a chamber said to be an intermediate chamber (13) itself closed opposite to the transverse wall (25) by the second stopper (20),
- which second stopper (20) comprises an orifice (26) for communication between the first bottom chamber (11) and the intermediate chamber (13), a lateral orifice (6) for discharging the gases to the outside of the component being situated in the second bottom chamber (12),
- a second top chamber (28) closed by the first stopper (20),
- the lateral orifice (6) pierced in the body (1) communicating with the second bottom chamber (12) and being capable of discharging the gases contained in the receptacle (2) and through the bottom chambers (11, 12) and the intermediate chamber (13), to the outside of the component once attached to the latter,
- the attachment system (9) comprising a seal (8) and coupling means capable of interacting in a sealed manner with the top portion of the receptacle (2),
- the outlet orifice (6) being calibrated and predefining a certain flow rate of gas depending on the pressure P₅ existing in the second bottom chamber (12) and held by a pressure balance on either side of the control member (19),
- and the pneumatic component being used for the controlled microdiffusion of the gas continuously and at a constant flow rate from a receptacle (2) that is pre-existing and remaining unchanged.

3. Pneumatic component according to either one of Claims 1 and 2, **characterized in that** the control member (19, 20) consists of an elastic means (14) attached at its periphery to the lateral walls (16).

4. Pneumatic component according to either one of Claims 1 and 2, **characterized in that** the control member (19, 20) is a piston sliding against the internal lateral walls (16), and the top chamber (10) is cylindrical.

5. Pneumatic component according to Claim 4, **characterized in that** the top chamber (10, 28) is completely closed and has no outlet at its end (29) opposite to the piston (19, 20).

6. Pneumatic component according to Claim 5, **characterized in that** the lateral orifice (6) pierced in the body (1) communicates with the first top chamber (10) when the device is ready to be installed on the receptacle (2), then, once the device is attached to this receptacle, the valve (3) causing the piston (20) to rise again by compressing the gas contained in this top chamber (10), the lateral orifice (6) communicates with the bottom chamber (11, 12).

7. Pneumatic component according to either one of Claims 5 and 6, **characterized in that** the top chamber (10, 28) is pre-filled with a gas (P) at an initial pressure (P₁).

8. Pneumatic component according to any one of Claims 1 to 7, **characterized in that** the lateral orifice (6) is furnished with a valve (7) or comprises at least one element with a calibrated hole making it possible to predefine a certain flow rate of gas.

9. Pneumatic component according to any one of Claims 1 to 8, **characterized in that** it comprises a spring (15, 18) that is placed in the top chamber (10, 28) and that presses on the control member (19, 20).

10. Pneumatic component according to Claim 9, **characterized in that** it comprises a means (17, 117) for adjusting the said spring (15, 18).

11. Pneumatic component according to any one of Claims 1 to 10, **characterized in that** the body (1) comprises a second orifice (22) for the outlet of gas placing the bottom chamber (11, 12) in communication with the outside and on which a pressure measurement means (23) or a safety valve (24) is mounted.

12. Pneumatic component according to any one of Claims 1 to 11, **characterized in that** it comprises a gas deflector (38) capable of being mounted on the end of the aerosol valve (3) of the receptacle (2) and of diverting the gas flow leaving the valve (3) when the control member (19, 20) is pressed onto the latter.

## Patentansprüche

1. Pneumatisches Bauteil zur Befestigung auf einem unter Druck stehenden Behälter (2) für Gas, der mit einem Aerosolventil (3) versehen ist, umfassend:
- einen hohlen Körper (1) dessen Innenbereich mindestens eine obere, innere Kammer (10) umfasst, welche durch ein Verschlussorgan (20) verschlossen ist, das beweglich und dicht gegenüber den inneren Seitenwänden (16) des Innenbereichs des hohlen Körpers ist, welche das ein Steuerorgan bildende Verschlussorgan (20) umgeben;
- ein Befestigungssystem (9) zur Befestigung des Körpers (1), das mit der Außenseite (35) des distalen Endes dessen hohlen Abschnitts in bezug auf die obere Kammer (10) jenseits des Verschlussorgans (20) fest verbunden ist und mit dem oberen Abschnitt des Behälters (2) zusammenwirkt, welcher das Ventil (3) umgibt,
- mindestens eine untere Kammer (11), die gebildet ist, nachdem das Bauteil auf dem Behälter (2) befestigt ist, und zwischen dem Verschlussorgan (20) und dem oberen Abschnitt des Behälters (2) geschlossen ist, wobei sich das Verschlussorgan (20) mit einer vorbestimmten Kraft gegen das Ventil (3) abstützt,
- eine seitliche, in den Körper (1) eingebrachte Öffnung (6), die nachdem sie auf dem Behälter (2) befestigt ist mit der unteren Kammer (11) kommuniziert, um das Ableiten der in diesem befindlichen Gase über die untere Kammer (11) zur Außenseite des Bauteils hin sicherzustellen, **dadurch gekennzeichnet, dass**:
- das Befestigungssystem (9) einen Dichtungsring (8) sowie Befestigungsmittel zum dichtenden Zusammenwirken mit dem oberen Abschnitt des Behälters (2) umfasst,
- die Auslassöffnung (6) kalibriert ist und in Abhängigkeit des in der Kammer (11) herrschenden, durch das Druckgleichgewicht auf beiden Seiten des Verschlussorgans (20) aufrechterhaltenen Druckes P₃ einen bestimmten Gasdurchfluss vorbestimmt,
- und das pneumatische Bauteil zur kontinuierlichen, kontrollierten Mikrodiffusion von Gas mit konstantem Durchfluss aus einem Behälter (2) verwendet wird, der im Vorhinein existiert und unverändert bleibt.

2. Pneumatisches Bauteil zur Befestigung auf einem unter Druck stehenden Behälter (2) für Gas, der mit einem Aerosolventil (3) versehen ist, umfassend:
- einen hohlen Körper (1) dessen Innenbereich mindestens eine obere, innere erste Kammer (10) umfasst, welche durch ein erstes Verschlussorgan (19) verschlossen ist, das beweglich und dicht gegenüber den inneren Seitenwänden (16) des Innenbereichs des hohlen Körpers ist, welche das ein Steuerorgan bildende erste Verschlussorgan (19) umgeben;
- eine erste untere Kammer (11), die gebildet ist, nachdem das Bauteil auf dem Behälter (2) befestigt ist, und zwischen einem zweiten Verschlussorgan (20) und dem oberen Abschnitt des Behälters (2) geschlossen ist, wobei sich das Verschlussorgan (20) mit einer vorbestimmten Kraft gegen das Ventil (3) abstützt,
- ein Befestigungssystem (9) zur Befestigung des Körpers (1), das mit der Außenseite (35) des distalen Endes dessen hohlen Abschnitts in bezug auf die obere Kammer (10) jenseits des Verschlussorgans (20) fest verbunden ist und mit dem oberen Abschnitt des Behälters (2) zusammenwirkt, welcher das Ventil (3) umgibt,
- eine zweite untere Kammer (12), die zwischen der oberen Kammer (10) und der ersten unteren Kammer (11) angeordnet ist und gebildet ist, nachdem das Bauteil auf dem Behälter (2) befestigt ist, und zwischen dem ersten Verschlussorgan (19), welches dicht ist und die untere von der oberen Kammer (10) trennt, und einer Querwand (25) geschlossen ist, welche eine Öffnung (30) aufweist, die mit einem Ventil (32) versehenen ist, das sich durch den Druck eines Fingers (40) öffnet, der mit dem ersten Verschlussorgan (19) verbunden ist und mit einer Zwischenkammer (13) kommuniziert, welche auf der entgegengesetzten Seite der Wand (25) durch das zweite Verschlussorgan (20) verschlossen ist,
- welches zweite Verschlussorgan (20) eine Öffnung (26) zur Kommunikation zwischen der ersten unteren Kammer (11) und der Zwischenkammer (13) und eine in der zweiten unteren Kammer (12) angeordnete, seitliche Öffnung (6) zum Ablassen der Gase zur Außenseite des Bauteils umfasst,
- eine zweite obere, durch das erste Verschlussorgan (20) verschlossene Kammer (28),
- wobei die seitliche, in den Körper (1) eingebrachte Öffnung (6) mit der zweiten unteren Kammer (12) kommuniziert und, nachdem das Bauteil auf dem Behälter (2) befestigt ist, das Ableiten der in diesem befindlichen Gase über die unteren Kammern (11, 12) und die zwischen Kammer (13) zur Außenseite des Bauteils hin sicherstellen kann,
- das Befestigungssystem (9) einen Dichtungsring (8) sowie Befestigungsmittel zum dichtenden Zusammenwirken mit dem oberen Abschnitt des Behälters (2) umfasst,
- die Auslassöffnung (6) kalibriert ist und in Abhängigkeit des in der zweiten, unteren Kammer (11) herrschenden und durch das Druckgleichgewicht auf beiden Seiten des Verschlussorgans (19) aufrechterhaltenen Druckes P₃ einen bestimmten Gasdurchfluss vorbestimmt,
- und das pneumatische Bauteil zur kontinuierlichen, kontrollierten Mikrodiffusion von Gas mit konstantem Durchfluss aus einem Behälter (2) verwendet wird, der im Vorhinein existiert und unverändert bleibt.

3. Pneumatisches Bauteil nach einem der Ansprüche 1 oder 2, **dadurch gekennzeichnet, dass** das Steuerorgan (19, 20) aus einer elastischen Einrichtung (14) gebildet ist, die mit ihrer Außenseite an den Seitenwänden (16) befestigt ist.

4. Pneumatisches Bauteil nach einem der Ansprüche 1 oder 2, **dadurch gekennzeichnet, dass** das Steuerorgan (19, 20) ein Kolben ist, der entlang der inneren Seitenwände (16) gleitet, und die obere Kammer (10) zylindrisch ist.

5. Pneumatisches Bauteil nach Anspruch 4, **dadurch gekennzeichnet, dass** die obere Kammer (10, 28) vollständig verschlossen ist und an deren dem Kolben (19, 20) abgewandten Ende (29) ein Sackloch bildet.

6. Pneumatisches Bauteil nach Anspruch 5, **dadurch gekennzeichnet, dass**, wenn die Vorrichtung zur Installation auf dem Behälter (2) bereit ist, die seitliche, in den Körper (1) eingebrachte Öffnung (6) mit der oberen ersten Kammer (10) kommuniziert und sodann, wenn die Vorrichtung auf dem Behälter befestigt ist, das Ventil (3) den Kolben (20) ansteigen lässt und dabei das in der oberen Kammer (10) befindliche Gas komprimiert, die seitliche Öffnung (6) mit der unteren Kammer (11, 12) kommuniziert.

7. Pneumatisches Bauteil nach einem der Ansprüche 5 oder 6, **dadurch gekennzeichnet, dass** die obere Kammer (10, 28) mit einem Gas (P) unter einem Initialdruck (P₁) vorgefüllt ist.

8. Pneumatisches Bauteil nach einem der Ansprüche 1 bis 7, **dadurch gekennzeichnet, dass** die seitliche Öffnung (6) ein Ventil (7) aufweist oder mindestens ein Bauteil mit einem kalibrierten Loch umfasst, um einen bestimmten Gasdurchfluss vorzubestimmen.

9. Pneumatisches Bauteil nach einem der Ansprüche 1 bis 8, **dadurch gekennzeich-net, dass** es eine Feder (15, 18) aufweist, die in der oberen Kammer (10, 28) angeordnet ist und auf das Steuerorgan (19, 20) drückt.

10. Pneumatisches Bauteil nach einem der Ansprüche 1 bis 9, **dadurch gekennzeichnet, dass** es eine Einstellvorrichtung (17, 117) der Feder (15, 18) aufweist.

11. Pneumatisches Bauteil nach einem der Ansprüche 1 bis 10, **dadurch gekennzeichnet, dass** der Körper (1) eine zweite Öffnung (22) zum Gasaustritt aufweist, die die untere Kammer (11, 12) mit dem Außenbereich kommunizieren lässt und auf der eine Einrichtung (23) zur Druckmessung oder ein Sicherheitsventil (24) angebracht ist

12. Pneumatisches Bauteil nach einem der Ansprüche 1 bis 11, **dadurch gekennzeichnet, dass** es einen Gasdeflektor (38) umfasst, der auf das Ende des Aerosolventils (3) des Behälters (2) montierbar ist, um den Fluss des aus dem Ventil (3) austretenden Gases umzuleiten wenn das Steuerorgan (19, 20) auf das Ventil drückt.
